# EUROPÄISCHE PATENTSCHRIFT

(11) **EP 0 902 455 B1**
(45) Veröffentlichungstag und Bekanntmachung des Hinweises auf die Patenterteilung: **01.12.2004**
(21) Anmeldenummer: 98202924.1
(22) Anmeldetag: 02.09.1998
(51) Int. Cl.: H01J 35/10, F16C 17/10, F16C 23/04, F16C 27/02, F16C 33/10

(54) **Drehanoden-Röntgenröhre mit einem hydrodynamischen Gleitlager**
Rotating anode type X-ray tube with a hydrodynamic slide bearing
Tube à rayons X à anode tournante avec palier hydrodynamique à glissement

(30) Priorität: 11.09.1997 DE 19739908
(43) Veröffentlichungstag der Anmeldung: 17.03.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Hove, Ulrich, c/o Philips Patentverw.GmbH, 22335 Hamburg (DE)
(74) Vertreter: Volmer, Georg, Dipl.-Ing.

(56) Entgegenhaltungen:
- EP-A- 0 248 480
- EP-A- 0 456 456
- GB-A- 1 213 146
- GB-A- 1 229 623

## Beschreibung

Die Erfindung betrifft eine Drehanoden-Röntgenröhre mit einem der Lagerung der Drehanode dienenden Gleitlager, das ein inneres Lagersegment und ein äußeres, eine Halterung aufweisendes Lagersegment umfaßt, wobei sich zwischen der Halterung und dem inneren Lagersegment Zwischenstücke befinden und wobei zueinander korrespondierend geformte Lagerflächen auf dem inneren Lagersegment und in den Zwischenstücken zur Aufnahme radialer und axialer Lagerkräfte vorgesehen sind. Außerdem betrifft die Erfindung ein bei einer Drehanoden-Röntgenröhre einsetzbares Gleitlager.

Eine solche Drehanoden-Röntgenröhre bzw. ein solches Gleitlager sind aus dem DE-GM 87 05 478 bekannt. Die Zwischenstücke sind dabei mit ihren Außenflächen der rohrförmigen Halterung und mit ihren Innenflächen den kegelstumpfförmigen Lagerflächen auf dem inneren Lagersegment angepaßt. Mittels einer auf eines der Zwischenstücke einwirkenden und von einer Feder erzeugten Vorspannung wird dabei sichergestellt, daß das Lagerspiel auch bei einer Erwärmung des Gleitlagers konstant bleibt; allerdings vergrößert sich dadurch auch das Anlaufmoment.

Die Tragfähigkeit eines Gleitlagers ist stark von dem Abstand der im inneren und äußeren Lagersegment zusammenwirkenden Lagerflächen abhängig. Die Tragfähigkeit des Gleitlagers ist um so größer je kleiner der Abstand ist. In der Praxis liegt dieser Abstand in der Größenordnung von 10µm. Derart geringe und über die Lagerfläche konstante Abstände lassen sich nur durch eine exakte und kostenaufwendige Fertigung erreichen. Gegenüber Gleitlagern mit zur Rotationsachse senkrechten Lagerflächen für die Aufnahme der axialen Lagerkräfte und mit wenigstens einer zylinderförmigen Lagerfläche zur Aufnahme der radialen Lagerkräfte hat das bekannte Gleitlager den Vorteil, daß nur zwei (kegelstumpfförmige) Lagerflächen auf dem inneren Lagersegment und in den Zwischenstücken mit der erforderlichen Exaktheit bearbeitet werden müssen.

Darüberhinaus müssen aber auch die in der rohrförmigen Halterung geführten Außenflächen der Zwischenstücke exakt konzentrisch zu den darin vorgesehenen konusförmigen Lagerflächen verlaufen, weil sich anderenfalls die Lagerflächen verkanten. Schließlich muß der Außendurchmesser der Zwischenstücke sehr genau dem Innendurchmesser der rohrförmigen Halterung angepaßt sein, damit einerseits die Zwischenstücke in der rohrförmigen Halterung verschiebbar sind und andererseits kein Spielraum zwischen den einander zugewandten Flächen der Zwischenstücke einerseits und der rohrförmigen Halterung andererseits verbleibt.

Aufgabe der vorliegenden Erfindung ist es, eine Drehanoden-Röntgenröhre mit einem Gleitlager anzugeben, das mit verringertem Fertigungsaufwand herstellbar ist. Ausgehend von einer Drehanoden-Röntgenröhre der eingangs genannten Art wird diese Aufgabe dadurch gelöst, daß die einander zugewandten Flächen der Zwischenstücke und der Halterung so geformt sind, daß sich die Zwischenstücke innerhalb der Halterung entsprechend den Lagerflächen ausrichten können. Ein erfindungsgemäßes Gleitlager ist in Anspruch 10 angegeben.

Bei der Erfindung wird durch die Formgebung der einander zugewandten Flächen der Halterung und der Zwischenstücke erreicht, daß sich die Lagerflächen in den Zwischenstücken entsprechend den Lagerflächen auf dem inneren Lagersegment ausrichten können und zwar auch dann, wenn die mit der Halterung in Berührung kommenden Außenflächen der Zwischenstücke nicht exakt konzentrisch zu den darin vorgesehenen Lagerflächen verlaufen. Bei einem derartigen Gleitlager kommt es also nur noch darauf an, daß die Lagerflächen in den Zwischenstücken einerseits und auf den inneren Lagersegment andererseits einander genau entsprechen.

Die Innenflächen der Halterung und die mit ihnen in Berührung kommenden Außenflächen der Zwischenstücke müssen so geformt sein, daß die Zwischenstücke gegenüber der Halterung gekippt werden können. Der dabei maximal erforderliche Kippwinkel hängt von der Genauigkeit der Herstellung ab; er kann jedoch auch bei geringem Herstellungsaufwand klein gehalten werden, z.B. kleiner als 1°. Zu diesem Zweck könnten die genannten Flächen wie bei einem Gelenklager beide kugelkalottenförmig geformt sein. Ein geringerer Fertigungsaufwand ergibt sich aber, wenn die genannten Flächen entsprechend den Ansprüchen 2 und 3 gestaltet sind.

Die Lagerflächen müssen so geformt sein, daß sie einerseits radiale und andererseits axiale Lagerkräfte aufnehmen können, wobei die von den beiden Lagern aufzunehmenden axialen Lagerkräfte einander entgegengerichtet sind. Die Normalen auf die rotationssymmetrischen Lagerflächen dürfen daher - zumindest in einem bestimmten Bereich - weder parallel noch rechtwinklig zur Rotationsachse verlaufen. Eine mit relativ geringem Aufwand herstellbare Form der Lagerflächen ist in Anspruch 4 angegeben.

Anspruch 5 beschreibt eine Ausführungsform, die den Zusammenbau des Gleitlagers erleichtert. Dabei kann gemäß Anspruch 6 die Verstellung der beiden Teile und damit die Einstellung des Lagerspiels dadurch ausgeführt werden, daß der eine Teil mehr oder weniger in den anderen hineingeschraubt wird. Das für die Funktion des Gleitlagers entscheidende Lagerspiel wird hier also nicht - wie bei Drehanoden-Röntgenröhren mit getrennten Lagerflächen für die axialen und radialen Lagerkräfte - durch eine hochgenaue Feretigung vorgegeben, sondern durch einen einfachen Einstellvorgang.

Im allgemeinen reicht die Reibung zwischen den Zwischenstücken und der Halterung aus, um ein Verdrehen der Zwischenstücke gegenüber der Halterung bei rotierendem Gleitlager zu verhindern. Bei Bedarf ist es aber möglich, die Möglichkeit eines solchen Verdrehens durch die in Anspruch 7 angegebene Ausgestaltung ganz zu verhindern.

Für die Verbindung der Lagersegmente mit dem Kolben der Röntgenröhre gibt es die in Anspruch 8 und 9 angegebenen Möglichkeiten. Die Alternative nach Anspruch 8 bietet den Vorteil, daß durch eine in Richtung der Rotationsachse verlaufende Innenbohrung im inneren Lagersegment Wärme aus dem Lager abgeführt werden kann.

Die Erfindung wird nachstehend anhand der Zeichnungen näher erläutert.
Es zeigen:
- Fig. 1: eine erfindungsgemäße Röntgenröhre
- Fig. 2: das Gleitlager dieser Röntgenröhre
- Fig. 3: eine andere Ausführungsform einer Röntgenröhre
- Fig. 4: das zugehörige Gleitlager
- Fig. 5: eine weitere Ausgestaltung des Gleitlagers

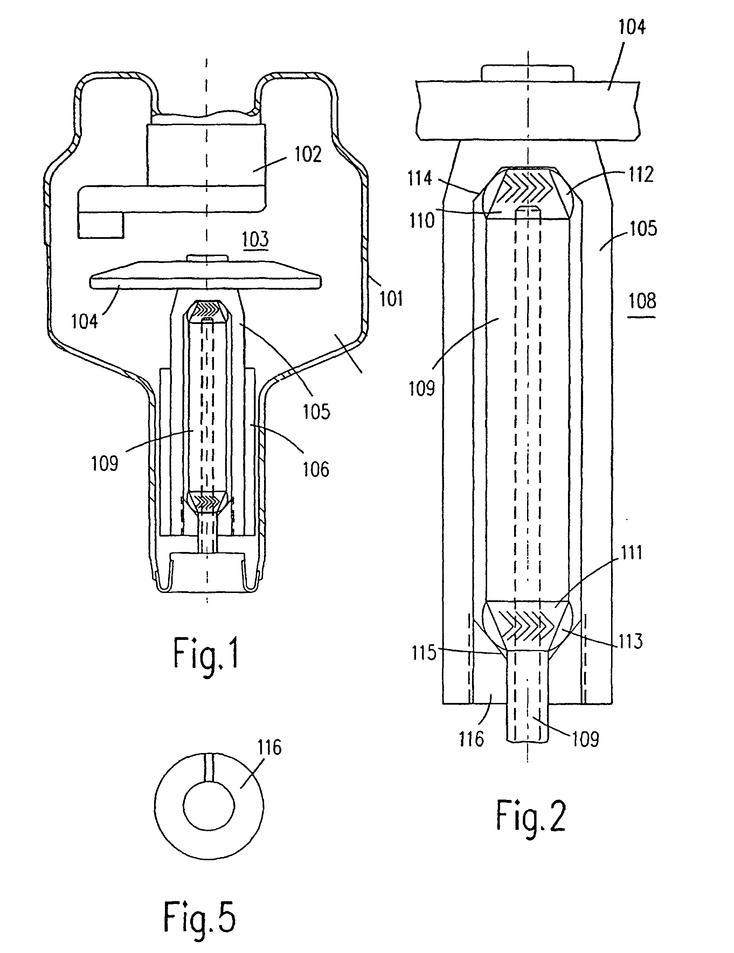

Fig. 1 stellt schematisch eine Drehanoden-Röntgenröhre dar, deren Vakuumkolben - z.B. aus Glas - mit 101 bezeichnet ist. An dem Vakuumkolben 101 ist eine Kathode 102 sowie eine Drehanode 103 befestigt. Die Drehanode umfaßt eine Anodenscheibe 104, die mit einer Halterung 105 verbunden ist. An der Halterung ist ein Rotor 106 befestigt, der mit einem nicht näher dargestellten Stator außerhalb des Röhrenkolbens 101 zum Antrieb der Anodenscheibe 104 zusammenwirkt.

Die Anodenscheibe 104 ist in einem Gleitlager gelagert, das sich aus einem äußeren (in diesem Falle drehbaren) Lagersegment und einem davon umschlossenen inneren, (feststehenden) Lagersegment zusammensetzt. Das Gleitlager ist in Fig. 2 in einem größeren Maßstab dargestellt als in Fig. 1. Man erkennt eine zum inneren Lagersegment gehörende, fest mit dem Röhrenkolben verbundene Achse 109, die an ihrem oberen Ende eine sich nach oben verjüngende, kegelstumpfförmige Lagerfläche 110 aufweist, die mit einem Spiralrillenmuster versehen ist. Im unteren Bereich der Achse 109 ist eine gleichartige Lagerfläche 111 vorgesehen, die sich jedoch nach unten verjüngt, wobei sich die Achse 109 mit entsprechend verringertem Durchmesser nach unten fortsetzt.

Die Lagerflächen 110 und 111 bilden zusammen mit den ebenfalls kegelstumpfförmig geformten Innenflächen zweier Zwischenstücke 112 bzw. 113 je ein Spiralrillenlager, das gleichzeitig axiale und radiale Lagerkräfte aufnehmen kann. Die Außenflächen der Zwischenstücke 112, 113 haben vorzugsweise die Form einer Kugelkalotte. Die Außenfläche des Zwischenstücks 112 stützt sich auf einer zur Rotationsachse symmetrischen kegelstumpfförmigen Innenfläche 114 eines Halterungsteils 105 ab. Analog dazu stützt sich die Außenfläche des unteren Zwischenstücks 113 auf der kegelmantelförmigen Innenfläche 115 eines weiteren, ebenfalls zur Rotationsachse symmetrischen Halterungsteils 116 ab, das über ein Gewinde in axialer Richtung verstellbar mit dem Halterungsteil 105 verbunden ist. Die beiden Halterungsteile 105 und 116 bilden zusammen eine Halterung 108, die die Zwischenstücke 112 und 113 in radialer und axialer Richtung abstützt. In dem - in der Zeichnung nicht erkennbaren - Spalt zwischen der Lagerfläche 110 und dem Zwischenstück 112 sowie in dem Spalt zwischen der Lagerfläche 111 und dem Zwischenstück 113 befindet sich ein flüssiges Schmiermittel mit niedrigem Dampfdruck, beispielsweise eine Galliumlegierung.

Bei dem Zusammenbau des Gleitlagers wird bei zunächst herausgedrehtem Halterungsteil 116 das Zwischenstück 112 in die Halterung eingelegt, wonach die Achse 109 in die Halterung eingeführt wird und das Zwischenstück 113 auf die untere Lagerfläche aufgeschoben wird. Danach wird das Halterungsteil 116 in das Halterungsteil 105 hineingeschraubt, wobei sich die Außenflächen der Zwischenstücke 112 und 113 so ausrichten, daß die in ihrem Innern vorgesehenen Lagerflächen vollflächig auf die Lagerflächen 110 und 111 gepreßt werden. Danach wird der Halterungsteil 116 in definierter Weise gelöst, um das erwünschte Lagerspiel einzustellen.

Im Innern der Achse 9 kann eine in axialer Richtung verlaufende Kühlbohrung vorgesehen sein, über die durch ein geeignetes Kühlmedium die Wärme, die über die Halterung, die Zwischenstücke und das Schmiermittel auf die Achse 109 gelangt, abgeführt werden kann. Bei rotierender Anodenscheibe 104 rotieren die Zwischenstücke 112, 113 synchron dazu mit. Ihre Berührungsfläche mit den Halterungsteilen 105 bzw. 116 ist zwar gering, doch reicht sie im allgemeinen aus, um die Zwischenstücke 113 mitzunehmen.

Eine Drehung zwischen den Zwischenstücken 112, 113 und den Halterungsteilen 105,116 läßt sich dadurch vermeiden, daß - wie in Fig. 5 für das Halterungsteil 116 in einer Draufsicht dargestellt - das Halterungsteil mit einer radial angeordneten, vorspringenden Rippe 121 (oder einem Stift) versehen wird, die in eine nicht näher dargestellte Nut in dem Zwischenstück eingreifen kann. Diese Nut sollte tiefer sein als die Rippe 121, damit sich nur die konvexe Außenfläche des Zwischenstücks auf den kegelförmigen Innenflächen 114 bzw. 115 abstützen kann. Außerdem sollten die Nuten breiter sein als die Rippen, so daß die Zwischenstücke gegenüber den Innenflächen gekippt werden können.

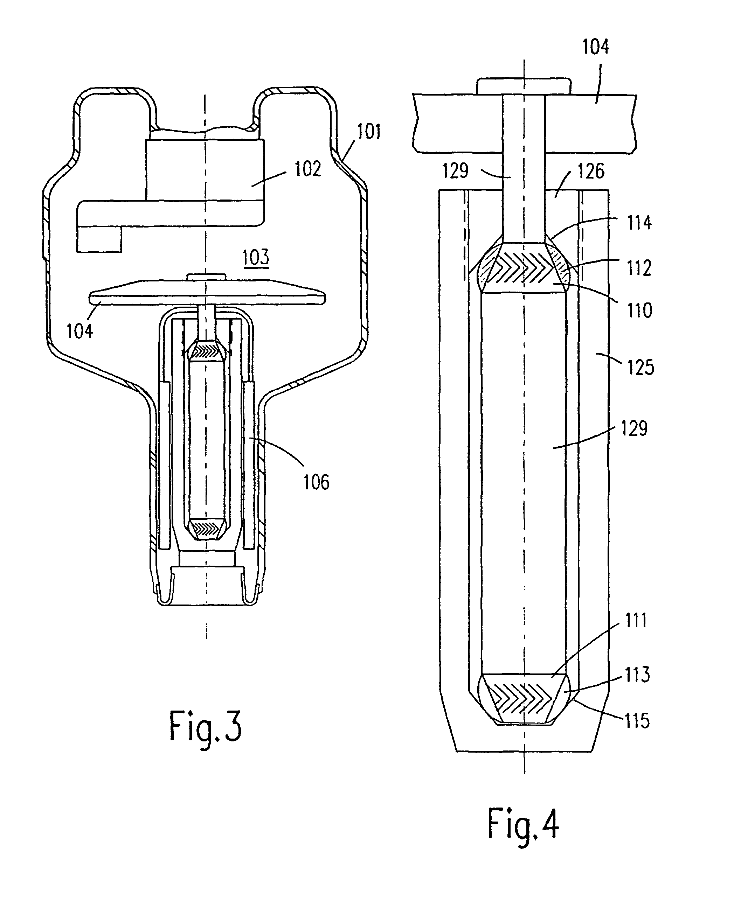

Anhand von Fig. 1, 2 wurde eine Ausführungsform erläutert, bei der das innere Segment des Gleitlagers fest mit den Röhrenkolben und das äußere mit der Anodenscheibe 104 verbunden ist. In den Figuren 3 und 4 ist eine Ausführungsform dargestellt, bei der das äußere Lagersegment des Gleitlagers mit dem Röhrenkolben und das innere Lagersegment mit der Anodenscheibe 104 verbunden ist. Der Rotor 106 ist dabei mit einer Welle 129 verbunden.

Wie in Fig. 4 dargestellt, wird die Anodenscheibe von der Welle 129 getragen, die sich im Bereich einer Lagerfläche 110 kegelstumpfförmig nach unten erweitert und in einen Abschnitt mit größerem Durchmesser übergeht, an dessen Ende sich die kegelstumpfförmig nach unten verjüngende Lagerfläche 111 befindet. Die Lagerflächen 110, 111 bilden wiederum mit den entsprechend geformten Lagerflächen in den Zwischenstücken 112, 113 Gleitlager zur Aufnahme radialer und axialer Lagerkräfte. Die bei rotierender Anodenscheibe feststehende Halterung umfaßt einen zur Anode hin offenen, mit dem Röhrenkolben verbundenen Teil 125, dessen Innenflächen am unteren Ende einen kegelstumpfförmig abgeschrägten Bereich 115 aufweisen und einen darin mittels eines Außengewindes in axialer Richtung verstellbaren Halterungsteil 126, dessen kegelstumpfförmig nach unten gerichtete Flächen 114 das obere Zwischenstück 112 fixieren. Eine Wärmeabfuhr durch eine in axialer Richtung verlaufende Bohrung ist hierbei nicht ohne weiteres möglich.

Die ringförmigen Zwischenstücke am oberen Ende des Gleitlagers nach Fig. 2 und am unteren Ende des Gleitlagers nach Fig. 4 können auch kappenförmig ausgebildet sein und somit das obere bzw. das untere Lager nach außen hin abschließen, so daß dort kein Schmiermittel entweichen kann.

Beim Ausführungsbeispiel haben die Innenflächen der Halterung eine konische und die mit ihnen in Berührung kommenden Außenflächen der Zwischenstücke eine konvexe, rotationssymmetrische Form. Die genannten Flächen können auch anders geformt sein, z.B die Form einer Kalotte einer Kugel haben, oder die Innenflächen können konkav und die Außenflächen konisch geformt sein. Wichtig bei den verschiedenen Möglichkeiten ist, daß die Zwischenstücke gegenüber der Halterung gekippt werden können.

## Patentansprüche

1. Drehanoden-Röntgenröhre mit einem der Lagerung der Drehanode dienenden Gleitlager, das ein inneres Lagersegment und ein äußeres, eine Halterung (108) aufweisendes Lagersegment umfaßt, wobei sich zwischen der Halterung und dem inneren Lagersegment Zwischenstücke (112, 113) befinden und wobei zueinander korrespondierend geformte Lagerflächen (110 bzw 111) auf dem inneren Lagersegment und in den Zwischenstücken zur Aufnahme radialer und axialer Lagerkräfte vorgesehen sind,
**dadurch gekennzeichnet, daß** die einander zugewandten Flächen (114 bzw. 115) der Zwischenstücke (112, 113) und der Halterung (108) so geformt sind, daß sich die Zwischenstücke (112, 113) innerhalb der Halterung entsprechend den Lagerflächen (110, 111) ausrichten können.

2. Drehanoden-Röntgenröhre nach Anspruch 1,
**dadurch gekennzeichnet, daß** die der Halterung (108) zugewandten Flächen der Zwischenstücke eine konvexe, vorzugsweise rotationssymmetrische Form haben.

3. Drehanoden-Röntgenröhre nach Anspruch 2,
**dadurch gekennzeichnet, daß** die den Zwischenstücken zugewandten Flächen (114, 115) der Halterung die Form eines Kegelmantels haben.

4. Drehanoden-Röntgenröhre nach Anspruch 1,
**dadurch gekennzeichnet, daß** die Lagerflächen (110, 111) auf dem inneren Lagersegment (109) und in den Zwischenstücken (112, 113) die Form eines Kegelmantels haben.

5. Drehanoden-Röntgenröhre nach Anspruch 1,
**dadurch gekennzeichnet, daß** die Halterung zwei in axialer Richtung relativ zueinander verstellbare Teile (105, 116) umfaßt.

6. Drehanoden-Röntgenröhre nach Anspruch 5,
**dadurch gekennzeichnet, daß** die beiden Teile (105, 116) der Halterung über ein Gewinde (108) miteinander verbunden sind.

7. Drehanoden-Röntgenröhre nach Anspruch 1,
**dadurch gekennzeichnet, daß** die Halterung (108) und die Zwischenstücke (112, 113) durch formschlüssig miteinander zusammenwirkende Sicherungselemente (121) gegen Verdrehen gesichert sind.

8. Drehanoden-Röntgenröhre nach Anspruch 1,
**dadurch gekennzeichnet, daß** das innere Lagersegment (109) an dem Kolben (101) der Drehanoden-Röntgenröhre befestigt ist.

9. Drehanoden-Röntgenröhre nach Anspruch 1,
**dadurch gekennzeichnet, daß** das äußere Lagersegment (105, 116) an dem Kolben (101) der Drehanoden-Röntgenröhre befestigt ist.

10. Gleitlager, das ein inneres Lagersegment und ein äußeres, eine Halterung (108) aufweisendes Lagersegment umfaßt, wobei sich zwischen der Halterung und dem inneren Lagersegment Zwischenstücke (112, 113) befinden und wobei zueinander korrespondierend geformte Lagerflächen (110 bzw 111) auf dem inneren Lagersegment und in den Zwischenstücken zur Aufnahme radialer und axialer Lagerkräfte vorgesehen sind,
**dadurch gekennzeichnet, daß** die einander zugewandten Flächen (114, 115) der Zwischenstücke und der Halterung so geformt sind, daß sich die Zwischenstücke (112, 113) innerhalb der Halterung entsprechend den Lagerflächen (110, 111) ausrichten können.

## Claims

1. A rotating anode X-ray tube which includes a slide bearing which serves to journal the rotating anode and includes an inner bearing segment and an outer bearing segment which is provided with a holder (108), intermediate pieces (112, 113) being provided between the holder and the inner bearing segment and correspondingly formed bearing surfaces (110, 111) on the inner bearing segment and in the intermediate pieces being arranged to take up radial and axial bearing forces,
**characterized in that** the facing surfaces (114, 115) of the intermediate pieces (112, 113) and the holder (108) are formed in such a manner that the intermediate pieces (112, 113) in the holder are aligned with the bearing surfaces (110, 111).

2. A rotating anode X-ray tube as claimed in Claim 1,
**characterized in that** the surfaces of the intermediate pieces which face the holder (108) have a convex, preferably rotationally symmetrical shape.

3. A rotating anode X-ray tube as claimed in Claim 2,
**characterized in that** the surfaces (114, 115) of the holder which face the intermediate pieces are shaped as a surface of cone.

4. A rotating anode X-ray tube as claimed in Claim 1,
**characterized in that** the bearing surfaces (110, 111) on the inner bearing segment (109) and in the intermediate pieces (112, 113) are shaped as a surface of cone.

5. A rotating anode X-ray tube as claimed in Claim 1,
**characterized in that** the holder includes two portions (105, 116) which are adjustable relative to one another in the axial direction.

6. A rotating anode X-ray tube as claimed in Claim 5,
**characterized in that** the two portions (105, 116) of the holder are connected to one another via a thread (108).

7. A rotating anode X-ray tube as claimed in Claim 1,
**characterized in that** the holder (108) and the intermediate pieces (112, 113) are locked against rotation by means of locking elements (121) which co-operate by form locking.

8. A rotating anode X-ray tube as claimed in Claim 1,
**characterized in that** the inner bearing segment (109) is connected to the envelope (101) of the rotating anode X-ray tube.

9. A rotating anode X-ray tube as claimed in Claim 1,
**characterized in that** the outer bearing segment (105, 116) is connected to the envelope (101) of the rotating anode X-ray tube.

10. A slide bearing which includes an inner bearing segment and an outer bearing segment which is provided with a holder (108), intermediate pieces (112, 113) being provided between the holder and the inner bearing segment and correspondingly formed bearing surfaces ( 110, 111 ) on the inner bearing segment and in the intermediate pieces being arranged to take up radial and axial bearing forces,
**characterized in that** the facing surfaces (114, 115) of the intermediate pieces and the holder are formed in such a manner that the intermediate pieces (112, 113) in the holder are aligned with the bearing surfaces (110, 111).

## Revendications

1. Tube à rayons X à anode tournante avec un palier à glissement servant au logement de l'anode tournante qui comprend un segment de palier intérieur, un segment de palier extérieur présentant un support (108), des pièces intermédiaires (112, 113) se trouvant entre le support et le segment de palier interne et des surfaces de palier (110 ou 111) de formes correspondantes étant prévues sur le segment de palier interne et dans les pièces intermédiaires pour le logement de forces de palier radiales et axiales,
**caractérisé en ce que** les surfaces (114 ou 115) tournées l'une vers l'autre des pièces intermédiaires (112, 113) et du support (108) sont formées de telle sorte que les pièces intermédiaires (112, 113) puissent être orientées à l'intérieur du support conformément aux surfaces de palier (110, 111).

2. Tube à rayons X à anode tournante selon la revendication 1,
**caractérisé en ce que** les surfaces des pièces intermédiaires tournées vers le support (108) ont une forme convexe, de préférence à symétrie de rotation.

3. Tube à rayons X à anode tournante selon la revendication 2,
**caractérisé en ce que** les surfaces (114, 115) du support tournées vers les pièces intermédiaires ont la forme d'un cône.

4. Tube à rayons X à anode tournante selon la revendication 1,
**caractérisé en ce que** les surfaces de palier (110, 111) ont la forme d'un cône sur le segment de palier interne (109) et dans les pièces intermédiaires (112, 113).

5. Tube à rayons X selon la revendication 1,
**caractérisé en ce que** le support comprend deux pièces (105, 116) réglable l'une par rapport à l'autre en direction axiale.

6. Tube à rayons X à anode tournante selon la revendication 5,
**caractérisé en ce que** les deux pièces (105, 116) du support sont reliées l'une à l'autre par l'intermédiaire d'un filet (108).

7. Tube à rayons X à anode tournante selon la revendication 1,
**caractérisé en ce que** le support (108) et les pièces intermédiaires (112, 113) sont bloquées contre la rotation par des éléments de fixation (121) coopérant mécaniquement.

8. Tube à rayons X à anode tournante selon la revendication 1,
**caractérisé en ce que** le segment de palier (109) interne est fixé sur le piston (101) du tube à rayons X à anode tournante.

9. Tube à rayons X à anode tournante selon la revendication 1,
**caractérisé en ce que** le segment de palier (105, 116) externe est fixé sur le piston (101) du tube à rayons X à anode tournante.

10. Palier à glissement qui comprend un segment de palier interne et un segment de palier présentant un support (108), des pièces intermédiaires (112, 113) se trouvant entre le support et le segment de palier interne et des surfaces de palier (110 ou 111) de formes correspondantes étant prévues sur le segment de palier interne et dans les pièces intermédiaires en vue de l'absorption de forces de palier radiales et axiales,
**caractérisé en ce que** les surfaces (114, 115) tournées l'une vers l'autre des pièces intermédiaires et le support sont formées de telle sorte que les pièces intermédiaires (112, 113) puissent s'orienter à l'intérieur du support conformément aux surfaces de palier (110, 111).
